Europäisches Patentamt

European Patent Office

Office européen des brevets

(19)

(11) Numéro de publication : **0 056 348**
**B1**

(12) # FASCICULE DE BREVET EUROPÉEN

(45) Date de publication du fascicule du brevet :
17.07.85

(51) Int. Cl.⁴ : **G 01 C 21/00, G 06 G 9/00**

(21) Numéro de dépôt : **82400043.4**

(22) Date de dépôt : **12.01.82**

(54) Procédé et dispositif de navigation par re-localisation d'un mobile sur une carte.

(30) Priorité : **14.01.81 FR 8100571**

(43) Date de publication de la demande :
**21.07.82 Bulletin 82/29**

(45) Mention de la délivrance du brevet :
**17.07.85 Bulletin 85/29**

(84) Etats contractants désignés :
**DE GB SE**

(56) Documents cités :
**US-A- 3 283 133**
**AVIATION WEEK & SPACE TECHNOLOGY, Février**
**25, 1974 New York (US) P.J. KLASS: "New guidance**
**technique being tested", pages 48-51**

(73) Titulaire : **MATRA**
**4 rue de Presbourg**
**F-75116 Paris (FR)**

(72) Inventeur : **Do Mau, Lam**
**28 ter, rue Louis Hubert**
**F-78140 Vélizy (FR)**

(74) Mandataire : **Fort, Jacques et al**
**CABINET PLASSERAUD 84, rue d'Amsterdam**
**F-75009 Paris (FR)**

**0 056 348**

### Description

La présente invention a pour objet un procédé et un dispositif de re-localisation d'un mobile de direction de déplacement connue sur une carte donnant la répartition d'un paramètre physique mesurable à partir du mobile dans la région entourant la trajectoire nominale du mobile.

L'invention permet de résoudre de nombreux problèmes de navigation, en particulier dans le cas de mobiles qui doivent suivre une trajectoire théorique par rapport à laquelle ils doivent être ramenés en cas d'écart.

On connaît déjà des procédés et dispositifs de navigation de ce genre, utilisant un suivi de terrain (« Aviation Week and Space Technology », 25 février 1974, pp. 48-51). La plupart sont extrêmement complexes ou exigent la mémorisation et la mesure de plusieurs paramètres.

La présente invention vise à fournir un procédé et un dispositif mettant en œuvre un processus simple, n'exigeant que des mesures unidimensionnelles, de coût relativement faible.

Dans ce but, l'invention propose notamment un procédé suivant lequel on établit la carte en deux parties complémentaires dont les transparences respectives i et ī en chaque point sont, pour l'une des deux parties, fonction croissante de la valeur du paramètre en ce point, pour l'autre, fonction décroissante de cette valeur ; on mémorise sur un segment, de longueur déterminée l, les valeurs successives du paramètre mesurées à partir du mobile ; on détermine les flux lumineux totaux qui traversent les bandes de ladite carte parallèles à la trajectoire théorique et à distance variable de celle-ci lorsqu'on dirige, sur les deux parties, des flux lumineux dont l'un, i', est fonction croissante de la valeur du paramètre mesuré et mémorisé et dont l'autre, ī', est fonction décroissante de la valeur de ce paramètre, pour plusieurs positions longitudinales relatives du segment et de la carte, et on détermine l'emplacement transversal et longitudinal du segment pour lequel un facteur de corrélation obtenu à partir de la mesure des flux lumineux est maximal.

On voit que l'invention utilise le fait que, dans de nombreux cas, le cap suivi par un mobile à re-localiser sur une carte est connu, les écarts par rapport à la position théorique correspondant simplement à des translations. A titre d'exemples de problèmes que l'invention permet de résoudre, on peut notamment citer la relocalisation d'un avion le long de sa route théorique et perpendiculairement à celle-ci, le paramètre étant alors la hauteur au-dessus du sol, et la relocalisation d'un bateau sur sa route nominale et transversalement à celle-ci, sur une carte de champ magnétique, ce qui implique alors la mesure fine d'un paramètre constitué par le champ magnétique local.

Il faut remarquer au passage que l'invention utilise le calcul d'une fonction d'intercorrélation, c'est-à-dire une approche en elle-même connue (US-A-3 283 133), mais en rendant l'opération simple grâce à l'utilisation de cartes complémentaires conçues à cet effet et suivant un processus original, que ne suggère nullement l'art antérieur.

Suivant un autre aspect de l'invention, celle-ci propose un dispositif comprenant : un emplacement destiné à recevoir une carte en deux parties représentant une bande de terrain de part et d'autre de la trajectoire nominale, une des parties ayant en chaque point une transparence fonction croissante de la valeur du paramètre en ce point et, l'autre, une transparence fonction décroissnate de la valeur du paramètre ; des moyens d'éclairement placés d'un côté de la carte et dirigeant, sur une fraction de longueur déterminée de celle-ci, un flux lumineux qui, pour l'une des fractions et pour chaque position longitudinale est une fonction croissante de la valeur mémorisée du paramètre mesuré à partir du mobile et, pour l'autre, fonction décroissante ; des moyens de mesure des flux lumineux qui traversent plusieurs bandes parallèles à la direction de déplacement, à des distances variables de la trajectoire théorique ; et des moyens permettant de décaler la position longitudinale de la fraction illuminée de la carte ; et des moyens pour déterminer la position transversale et la position longitudinale de la bande pour laquelle une fonction des flux lumineux reçus est maximum ou minimum.

L'invention sera mieux comprise à la lecture de la description qui suit d'un mode particulier de réalisation, donné à titre d'exemple non limitatif. La description se réfère aux dessins qui l'accompagnent, dans lesquels :

la figure 1 est un schéma montrant, en élévation et en plan, la trajectoire théorique d'un aéronef par rapport au sol et à une carte représentant une bande de terrain de part et d'autre de cette trajectoire,

la figure 2 est un schéma montrant un fragment d'une carte transparente destinée à la mise en œuvre d'un mode de réalisation de l'invention ;

la figure 3 est un schéma de principe des parties mécaniques et optiques d'un dispositif de mise en œuvre de l'invention ;

la figure 4 est un synoptique de principe d'une fraction du circuit électronique du dispositif, qui intervient pour mémoriser les mesures du paramètre sur une longueur déterminée P ;

la figure 5 est un synoptique de principe d'une autre fraction du circuit électronique.

Avant de décrire l'invention, on rappellera quelques indications sur les techniques de corrélation utilisables pour résoudre les problèmes de navigation par suivi du terrain.

On supposera tout d'abord qu'il suffit de rechercher la position d'un aéronef 11 sur un trajet déterminé 10 dont il ne s'écarte pas.

Si on désigne par $z(x)$ la hauteur réelle au-dessus du sol de l'aéronef volant à altitude absolue

2

constante, et par $z_0(x)$ la variation de la hauteur le long de la trajectoire sur la carte, la localisation peut s'effectuer en recherchant la valeur de $x_0$ pour laquelle la fonction d'intercorrélation (au sens mathématique du terme) est maximum :

$$\int_0^p [z(x) \cdot z(x + x_0)]\, dx \tag{1}$$

Dans cette formule, p désigne la longueur du segment sur laquelle s'effectue la corrélation.

On peut également rechercher la valeur $x_0$ pour laquelle on a un minimum de la fonction

$$\int_0^p [z(x) - z_0(x - x_0)]^n\, dx \tag{2}$$

On peut en particulier adopter n = 2, ce qui correspond à la recherche de l'écart quadratique moyen minimum : dans ce cas, les expressions (1) et (2) sont équivalentes si z et $z_0$ sont aléatoires et ergodiques et si p est suffisamment long.

Dans la pratique, on aura généralement intérêt à adopter l'expression (2) avec un choix de n qui dépendra des caractéristiques que l'on juge les plus significatives. Si n a une valeur élevée, typiquement supérieure à 2, la corrélation s'effectue en attachant une importance particulière aux pics d'écart entre les courbes représentatives de la variation du paramètre. Si au contraire on donne à n une valeur faible, égale ou peu supérieure à 1, la corrélation attache une importance particulière au nombre de points où les courbes sont peu distantes.

En résumé, on utilisera par la suite les termes « facteur de corrélation », pour désigner une grandeur affectée à chaque emplacement possible sur la carte d'un segment de route réelle sur laquelle le paramètre a été mesuré et mémorisé, grandeur qui prend une valeur maximum ou minimum pour la position dans laquelle on a meilleure correspondance possible entre les variations mesurées et les variations sur la carte, suivant le critère retenu.

L'intégration peut se faire en utilisant des valeurs analogiques ou numériques. L'utilisation de signaux numériques codés à deux niveaux seulement peut présenter un intérêt particulier : en effet, dans ce cas, le facteur de corrélation donné par les formules (1) et (2) coïncide. Cette solution poura être utilisée lorsqu'on attache une importance particulière à la coïncidence des singularités de la variation du paramètre pour la re-localisation.

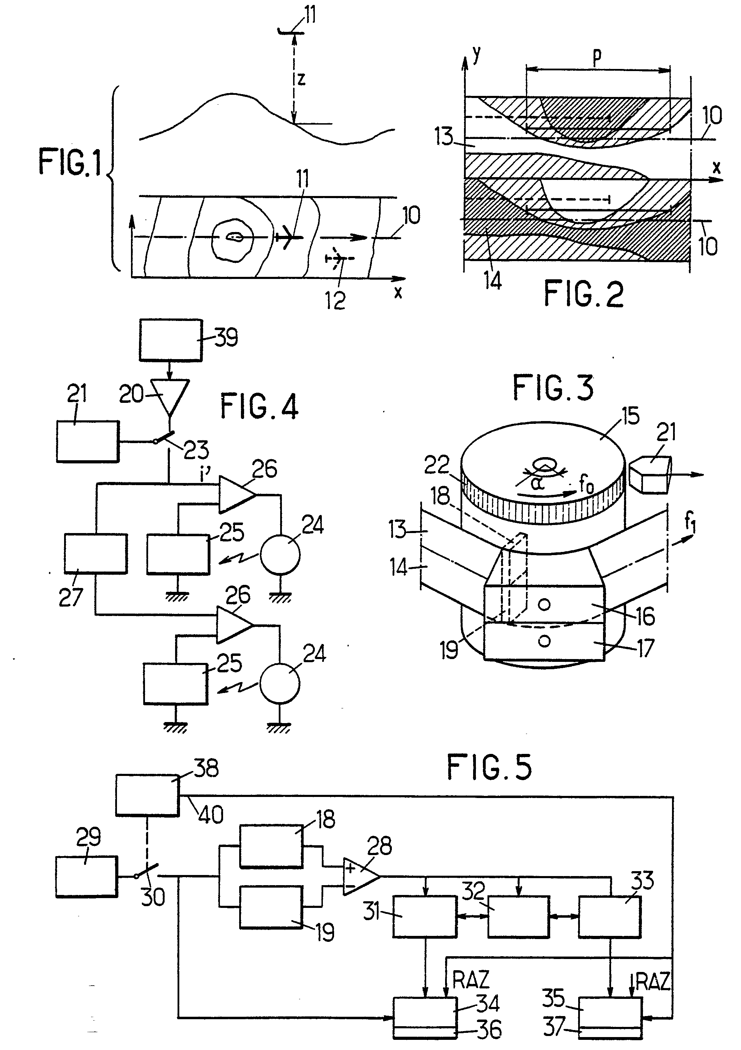

Comme on l'a déjà indiqué plus haut, l'invention est applicable du fait que le mobile, qu'on suppose être un aéronef, conserve sensiblement le cap théorique à tout moment. Comme le montre la figure 1, l'aéronef ne s'écarte durablement de sa trajectoire théorique 10 que dans le sens latéral. En conséquence, la détermination du facteur de corrélation pourra toujours s'effectuer sur des segments de longueur p parallèles à la direction de la trajectoire 10. Ce facteur de corrélation devra être déterminé pour plusieurs valeurs de x (suivant la direction de la trajectoire) et y (perpendiculairement à cette direction) ; cette recherche s'effectuera sur une longueur et une largeur de carte autour de la position théorique 11 suffisantes pour que la position réelle 12 s'y trouve.

On décrira maintenant un mode de mise en œuvre de l'invention dans lequel la recherche du facteur de corrélation optimale s'effectue en utilisant une carte en deux parties 13 et 14 donnant respectivement la valeur en chaque point de deux fonctions i, ī, variant entre 0 et 1, du paramètre, qu'on supposera être la hauteur z ou sin z, fonctions liées entre elles par la relation

$$\bar{i} = \sqrt{1 - i^2}.$$

La fonction i pourra être une représentation analogique de z, généralement linéaire. Plus fréquemment, la fonction i sera une représentation numérique de z, avec un nombre de niveaux de quantification qui peut être faible.

Chacune des portions de la carte donnera la variation du paramètre sur une bande de terrain autour de la trajectoire théorique 10 suffisamment large pour que, à la cadence de mesure prévue, l'aéronef ne risque pas d'en sortir.

De façon correspondante, la hauteur réelle au-dessus du terrain, mémorisée sur la longueur p, sera représentée sous forme de deux fonctions i'(x) et ī'(x) variant entre 0 et 1 et liées par la même relation que i et ī :

$$\bar{i}' = \sqrt{1 - i'^2}$$

On effectue ensuite le calcul d'une fonction qui prend une valeur minimum ou maximum lorsque la variation d'altitude réelle correspond exactement à la variation sur la carte. Cette fonction peut notamment être :

$$S = i \cdot i' + \bar{i} \cdot \bar{i}' \tag{3}$$

S'il y a coïncidence parfaite, S = 1 ; dans le cas contraire, on aura toujours S < 1. En effet, en posant $i = \cos \theta$ et $i' = \cos \phi$, on a :

$$S = \cos \theta \cos \phi + \sin \theta \sin \phi$$
$$= \cos (\theta - \phi)$$

Donc, S n'est égal à 1 que si $\theta = \phi$ et donc $i = i'$ : la corrélation optimale correspondra au maximum de S.

Au lieu de la fonction S, on peut utiliser la fonction D :

$$D = |\, i \cdot \bar{i'} - \bar{i} \cdot i' \,| \qquad (4)$$

qui, avec la même notation que ci-dessus, s'écrit :

$$D = |\sin (\theta - \phi)|$$

On est alors amené à rechercher le minimum de D.

On décrira maintenant, en faisant référence aux figures 3 à 5, un dispositif qui effectue la mesure du flux total traversant chacune des bandes par intégration dans le temps, et qui réalise de façon pratique la fonction S ou D.

La partie mécanique du dispositif, schématisée en figure 3, comporte un tambour 15 contre lequel la carte constituée des deux parties accolées 13 et 14 vient s'appuyer sur un angle $\alpha$ nettement inférieur à 360°. La carte sera généralement constituée par un film photographique dont la réalisation est particulièrement simple lorsqu'on utilise un codage binaire et que chaque partie est le négatif de l'autre. Les moyens pour diriger les flux lumineux $i'$ et $\bar{i'}$ à travers la carte sont représentés sous forme de simples boîtes à lumière 16 et 17 munies de lampes fournissant un flux lumineux modulable de façon précise et avec une faible constante de temps. Les boîtes à lumière 16 et 17 sont respectivement associées aux bandes 13 et 14 qu'elles illuminent dans la portion d'appui de ces bandes sur le cylindre 15. Ce dernier porte les moyens de détection et d'intégration, qu'on supposera être deux barrettes de détecteurs à couplage par charge, communément appelés CCD. Le pas d'écartement des détecteurs le long des barrettes 18 et 19 fixera le pas d'écartement des bandes le long desquelles s'effectuera la corrélation.

Le tambour 15 est muni de moyens, non représentés, qui seront généralement constitués par un moteur électrique pas à pas ou synchrone, permettant de le faire tourner dans le sens indiqué par la flèche $f_0$ à vitesse élevée, mais compatible avec la constante de temps de réponse des barrettes. La carte sera elle-même munie de moyens de déroulement permettant de la faire avancer pas à pas dans la direction indiquée par la flèche $f_1$.

Le dispositif comprend des moyens permettant de mesurer et de mémoriser le paramètre physique, qu'on supposera être la hauteur au-dessus du sol, et de moduler les flux $i'$ et $\bar{i'}$ en fonction des données mémorisées. Dans le mode de réalisation montré en figure 4, ces moyens comprennent un radio-altimètre 39, qui peut être classiquement associé à un système baro-inertiel, muni d'un amplificateur 20 et associé à une tête magnétique de lecture et d'écriture 21. Les moyens 39, 20 et 21 permettent de mesurer et de mémoriser, pendant une période qui sera généralement de quelques minutes dans le cas d'un aéronef, les variations de la hauteur z au-dessus du sol. La tête 21 peut coopérer avec un dispositif quelconque de mémorisation effaçable, tel que bande ou disque magnétique ou mémoire numérique, après numérisation du signal. Toutefois, une solution particulièrement intéressante, car elle élimine tout problème pratique de synchronisation, consiste à effectuer la mémorisation par inscription sur une bande magnétique 22 portée par le cylindre 15 (figure 3). La mémorisation peut alors s'effectuer sur un développement angulaire correspondant exactement à la longueur qui représente, sur la carte, le segment sur lequel s'est effectuée la mesure.

Un interrupteur 23 permet, après mémorisation, de relier la tête de lecture 21, ou une seconde tête, à des moyens de commande du flux. Les moyens montrés en figure 4 comprennent, pour chaque bande, un émetteur 24 et un récepteur 25 permettant de constituer une boucle asservie. Le signal $i'$ représentatif de l'altitude est directement appliqué à l'amplificateur de bouclage 26 qui attaque l'émetteur 24 d'éclairage de la bande 13. Ce signal $i'$ est appliqué à une électronique 27 de formation de $\sqrt{1 - i'^2}$ qui commande à son tour un amplificateur 26 de commande de l'émetteur 24 d'illumination de la bande 14. L'émetteur 24 et le récepteur 25 peuvent être respectivement constitués l'un par une barrette de diodes électroluminescentes ou une lampe séparée de la carte par un panneau translucide, l'autre, par un phototransistor.

Quant à l'électronique 27, elle peut être constituée par un réseau classique de résistances et de diodes.

Les moyens de mesure d'éclairement et de détermination du facteur de corrélation peuvent prendre la forme montrée en figure 5, qui permet de rechercher le minimum de D, donné par la formule (4) ci-dessus. Ces moyens comprennent une horloge 29 qui attaque l'entrée de balayage des barrettes 18 et 19 par l'intermédiaire d'un interrupteur 30. Un amplificateur différentiel 28 est relié aux sorties des barrettes 18 et 19 et reçoit donc, sur ses entrées, des signaux représentatifs du flux total reçu par deux détecteurs CCD correspondants des deux barrettes. La sortie de l'amplificateur 28 est reliée à un détecteur de minimum transversal 31, dont l'élément principal sera une diode en cas de fonctionnement analogique,

4

un comparateur en cas de fonctionnement numérique. Le détecteur 31 est associé à une mémoire 32 de conservation de valeur minimum, qui pourra, suivant le cas, être constituée par un condensateur ou un registre. Un second détecteur 33 est prévu pour effectuer une détection de minimum dans le sens longitudinal. Il coopère également avec la mémoire 32.

Le circuit de la figure 5 comprend encore des moyens d'identification de la bande de la zone explorée de la carte pour laquelle on obtient une valeur minimum de la sortie de l'amplificateur 28. Ces moyens comprennent deux compteurs 34 et 35. Chacun des compteurs 34 et 35 est associé à un registre de mémorisation correspondant 36 ou 37. L'entrée de comptage du compteur 34 est reliée à l'horloge 29 par l'intermédiaire de l'interrupteur 30. Celui-ci est commandé par un dispositif de synchronisation 38 qui, à chaque tour du tambour 15, fournit une impulsion de commande sur une sortie 40. Cette sortie est reliée, d'une part, à une entrée de remise à zéro du compteur 34, d'autre part, à l'entrée de comptage du compteur 35.

On décrira maintenant le fonctionnement du dispositif représenté en figures 2 à 5, fonctionnement qui comporte deux étapes.

La première étape peut être considérée comme étape de préparation. Elle consiste à enregistrer en temps réel le profil du terrain. Des moyens non représentés amènent l'interrupteur 23 dans la position où il est montré en figure 4. A partir de cet instant, les signaux fournis par le radio-altimètre 39 sont mémorisés par inscription sur la piste magnétique 22 à l'aide de la tête 21. A l'issue de cette inscription, qui durera généralement quelques minutes, le profil du terrain survolé, sur une longueur p, est mémorisé sous forme magnétique.

A cet instant, l'interrupteur 23 est amené, par des moyens non représentés, dans la position opposée à celle où il est représenté en figure 4 et l'étape de corrélation commence. L'initialisation s'effectue par remise à zéro des compteurs 34, 35 et des registres 36 et 37.

L'étape de corrélation est constituée par plusieurs phases successives toutes identiques, correspondant chacune à la recherche du couple de détecteurs CCD pour lequel, pour une position longitudinale déterminée du segment de longueur p sur la carte, l'expression D (formule (4) ci-dessus) est minimum.

Au cours de chaque phase, il y a d'abord intégration du flux lumineux par les barrettes 18 et 19, puis scrutation des couples de détecteurs 18 et 19 des barrettes, alors que le tambour tourne à vitesse constante et élevée (par exemple 10 tours par seconde environ). L'intégration commence lorsque le début de l'enregistrement du relief sur la piste 22 arrive en face de la tête 21 et que, simultanément, les barrettes 18 et 19 arrivent face aux boîtes à lumière 16 et 17. Le circuit montré en figure 4 fait alors varier l'éclairement suivant une loi représentative de la variation du relief et applique à chaque instant aux barrettes 18 et 19 les éclairements $i'$ et $\bar{i}$ correspondant à la hauteur au-dessus du sol.

Cette intégration se termine lorsque les barrettes ont intégré les flux lumineux correspondant aux variations de hauteur sur la longueur p, l'angle $\alpha$ devant évidemment être prévu pour correspondre au moins à cette distance. La scrutation du détecteur s'effectue alors pendant que le tambour effectue le reste de sa rotation. Elle est déclenchée par le dispositif de synchronisation 38 qui ferme l'interrupteur 30, de sorte que les impulsions d'horloge arrivent aux barrettes 18 et 19 et au compteur 34.

Au premier coup d'horloge, la sortie du premier détecteur de chaque barrette 18 et 19 est appliquée à l'amplificateur différentiel 28. Le signal correspondant est mémorisé en 32. En même temps, le compteur 34 s'incrémente d'une unité.

Au second coup d'horloge, c'est le second couple de détecteurs qui est relié à l'amplificateur 28, tandis que le compteur 34 s'incrémente de nouveau. Le détecteur de minimum 31 compare alors la valeur de D mémorisée en 32 et la nouvelle valeur. Si la nouvelle valeur est inférieure à l'ancienne, il l'inscrit en mémoire 32 et, en même temps, il provoque le transfert du contenu du compteur 34 dans le registre 36.

La même opération se répète jusqu'à ce que tous les couples de détecteurs aient été balayés. On obtient finalement, dans le registre 36, un nombre représentant la position transversale du couple de barrettes pour lequel D est minimum et, en mémoire 32, la valeur de ce minimum. On aura ainsi effectué une corrélation dans le sens transversal, qui conduira par exemple à retenir le segment représenté en tirets sur la figure 2.

La carte 13, 14 est alors avancée d'un pas par le dispositif de synchronisation 38, en même temps que le compteur 35 est incrémenté d'une unité. Les opérations d'intégration et de scrutation mentionnées ci-dessus vont se répéter et conduiront à retenir, en mémoire 32, le nouveau minimum éventuel, en même temps que, dans les registres 36 et 37, de nouvelles positions transversale et longitudinale éventuelles.

La même phase est répétée jusqu'à ce qu'ait été balayée une longueur de carte suffisamment longue pour que le segment p correspondant à la position réelle de l'aéronef s'y trouve à coup sûr. Les données finalement retenues dans les registres 36 et 37 correspondront par exemple au segment représenté en trait plein sur la figure 2. Les données correspondantes pourront être retransmises au système de pilotage de l'aéronef de façon à le ramener transversalement sur sa route théorique et à recaler le système de navigation dans le sens longitudinal.

On voit que le dispositif permettant d'effectuer une double corrélation est de conception et de réalisation simples et n'utilise que des composants disponibles de façon courante. Il est donc particulièrement avantageux. L'invention ne se limite toutefois pas à ce mode particulier de réalisation et il doit être entendu que la portée de la présente invention telle que revendiquée s'étend à toute variante restant dans le cadre des équivalences.

## Revendications

1. Procédé de re-localisation d'un mobile (11) de direction de déplacement connue sur une carte donnant la répartition d'un paramètre physique (2) mesurable à partir du mobile dans la région entourant la trajectoire nominale du mobile, caractérisé en ce que : on établit la carte en deux parties complémentaires (13, 14) dont les transparences respectives $i$ et $\bar{\imath}$ en chaque point sont, pour l'une des deux parties, fonction croissante de la valeur du paramètre en ce point, pour l'autre, fonction décroissante de cette valeur ; on mémorise sur un segment (p), de longueur déterminée, les valeurs successives du paramètre mesurées à partir du mobile (n) ; on détermine les flux lumineux totaux qui traversent les bandes de ladite carte parallèles à la trajectoire théorique et à distance variable de celle-ci lorsqu'on dirige, sur les deux parties, des flux lumineux dont l'un, $i'$, est fonction croissante de la valeur du paramètre mesuré et mémorisé et dont l'autre, $\bar{\imath}'$, est fonction décroissante de la valeur de ce paramètre, pour plusieurs positions longitudinales relatives du segment et de la carte ; et on détermine l'emplacement transversal et longitudinal du segment pour lequel un facteur de corrélation obtenu à partir de la mesure des flux lumineux est maximal.

2. Procédé suivant la revendication 1, caractérisé en ce que la transparence $\bar{\imath}$ de la seconde partie en chaque point est reliée à la transparence $i$ du point correspondant de la première partie par la relation $\bar{\imath} = \sqrt{1 - i^2}$ et en ce que le flux $\bar{\imath}'$ est relié au flux $i'$ par la relation $\bar{\imath}' = \sqrt{1 - i'^2}$.

3. Procédé suivant la revendication 2, caractérisé en ce que l'on détermine, pour chaque emplacement du segment, les grandeurs $i\,\bar{\imath}' + \bar{\imath}\,i'$ ou $|i\,i' - \bar{\imath}\,\bar{\imath}'|$ et en ce que l'on mémorise l'emplacement du segment pour lequel on a respectivement un maximum ou un minimum.

4. Procédé suivant la revendication 1, 2 ou 3, caractérisé en ce que lesdites transparences respectives sont des fonctions bi-univoques de la valeur du paramètre et en ce que chaque partie de la carte constitue le négatif de l'autre.

5. Procédé suivant l'une quelconque des revendications précédentes, caractérisé en ce que le paramètre est constitué, soit par la hauteur au-dessus du sol d'un aéronef constituant le mobile, soit le relief réel du terrain survolé par rapport à une référence arbitraire.

6. Procédé suivant la revendication 5, caractérisé en ce que le relief est détecté à bord par une combinaison de radio-altimètre et de système baro-inertiel.

7. Dispositif de re-localisation d'un mobile (11) de direction de déplacement connue sur une carte donnant la répartition d'un paramètre physique (z) mesurable à partir du mobile, caractérisé en ce qu'il comprend : un emplacement destiné à recevoir une carte en deux parties (13, 14) représentant une bande de terrain de part et d'autre de la trajectoire (10) nominale, une des parties ayant en chaque point une transparence fonction croissante de la valeur du paramètre (z) en ce point, et, l'autre, une transparence fonction décroissante de la valeur du paramètre ; des moyens d'éclairement (24) placés d'un côté de la carte et dirigeant, sur une fraction de longueur déterminée des deux parties de celle-ci, un flux lumineux qui, pour l'une des parties et pour chaque position longitudinale, est une fonction croissante de la valeur mémorisée du paramètre mesuré à partir du mobile et, pour l'autre, fonction décroissante ; des moyens de mesure des flux lumineux qui traversent plusieurs bandes parallèles à la direction de déplacement, à des distances variables de la trajectoire théorique ; des moyens permettant de décaler la position longitudinale de la fraction illuminée de la carte ; et des moyens pour déterminer la position transversale et la position longitudinale de la bande pour laquelle une fonction des flux lumineux reçus est maximum ou minimum.

8. Dispositif suivant la revendication 7, caractérisé en ce que les transparences $i$ et $\bar{\imath}$ des deux parties de la carte en chaque point sont respectivement proportionnelles à la hauteur et égale à $\sqrt{1 - i^2}$ et en ce que les moyens d'éclairement sont commandés de façon à fournir, à chaque point d'une des parties, un flux lumineux $i'$ proportionnel à la hauteur réelle mémorisée et, à chaque point correspondant de l'autre partie, un flux lumineux $\bar{\imath}' = \sqrt{1 - i'^2}$.

9. Dispositif suivant la revendication 7, caractérisé en ce que les moyens de mesure des flux lumineux totaux qui traversent plusieurs bandes parallèles à la direction de déplacement comprennent une barrette (18, 19) de détecteurs intégrateurs portée par un tambour rotatif (15) sur lequel s'appuie la carte.

10. Dispositif suivant la revendication 9, caractérisé en ce que les moyens d'éclairement sont constitués par des boîtes à lumière recouvrant ledit emplacement et comportant des sources lumineuses commandées en synchronisme avec la rotation du tambour de façon que les flux $i'$ et $\bar{\imath}'$ fournis à chaque instant soient représentatifs de la hauteur mesurée et mémorisée correspondant à la position longitudinale sur la carte occupée par les barrettes.

## Claims

1. Method for re-locating a vehicle (11) having a direction of movement which is predetermined on a map which indicates the distribution of a physical parameter (z) which is measurable from the vehicle in the zone around the set path of the vehicle, characterized by the steps of : preparing a map comprising two complementary parts (13, 14) having respective transparencies $i$ and $\bar{\imath}$ at each point are, for one of the parts, in increasing relation with the value of the parameter at that point and, for the other, in decreasing relation with that value ; storing the successive values of the parameter as measured from the vehicle (11) over a predetermined line segment (p) of predetermined length ; determining the cumulative light fluxes which cross bands of said map which are parallel to the set path and at a variable distance of the set path when light fluxes are directed onto both parts, one, i', of the fluxes being in increasing relation to the value of the parameter as measured and as stored and the other, ī, being in decreasing relation to the value of that parameter, for a plurality of relative longitudinal positions of the line segment and of the map ; and determining that transversal and longitudinal location of the line segment for which a correlation factor obtained from the measurement of the light fluxes is maximum.

2. Method according to claim 1, characterized in that the transparency ī of the second part at each point is related to the transparency i of the corresponding point of the first part by the relation $\bar{\imath} = \sqrt{1 - i^2}$ and in that the flux ī' is related to the flux i' by the relation $\bar{\imath}' = \sqrt{1 - i'^2}$.

3. Method according to claim 2, characterized in that the values of $i\,\bar{\imath}' + \bar{\imath}\,i'$ or $|i\,i' - \bar{\imath}\,\bar{\imath}'|$ are determined for each location on said line segment and in that the location of the line segment for which there is a maximum or a minimum, respectively, is stored.

4. Method according to claim 1, 2 or 3, characterized in that said respective transparencies are biunivocal functions of the value of the parameter and each part of the map is a negative representation of the other.

5. Method according to any one of the preceding claims, characterized in that the parameter consists either of the height above ground of a plane constituting said vehicle, or of the actual relief of ground which is overflown with respect to an arbitrary reference.

6. Method according to claim 5, characterized in that the relief is determined on board by a combination of a radioaltimeter and a baro-inertial system.

7. Apparatus for re-locating a vehicle (11) moving in a predetermined direction on a map which provides the distribution of a physical parameter (z) which can be measured from the vehicle, characterized in that it comprises : a location for receiving a map having two parts (13, 14) which represents a strip of ground on both sides of the set path (10), on of the parts having in each point a transparency which is in increasing relation to the value of the parameter (z) at that point and the other having a transparency which is in decreasing relation to the parameter ; lighting means (24) located on one side of the map for directing, onto a fraction of predetermined length of both parts of the map, a light flux which, for one of the parts and for each longitudinal position, is in increasing relation to the stored value of the parameter as measured from the vehicle and, for the other, in decreasing relation ; means for measuring the light fluxes which cross a plurality of bands which are parallel to the direction of movement, at variable distances from the set path ; means for offsetting the longitudinal position of the fraction of the map which is lighted ; and means for determining that transversal position and that longitudinal position of the band for which a function of the received light fluxes is maximum or minimum.

8. Apparatus according to claim 7, characterized in that the transparencies i and ī of the two parts of the map at each point are respectively in direct relation to the height and equal to $\sqrt{1 - i^2}$ and in that the lighting means are so controlled for delivering, on each point of one of the parts, a light flux i' which is in direct relation to the stored actual height and, on each corresponding point of the other part, a light flux $\bar{\imath}' = \sqrt{1 - i'^2}$.

9. Apparatus according to claim 7, characterized in that the means for measuring the overall light fluxes which cross a plurality of bands parallel to the direction of movement comprise a linear array (18, 19) of integrating sensors which is carried by a rotating drum (15) carrying the map.

10. Apparatus according to claim 9, characterized in that the lighting means consist of light boxes covering said location and having light sources which are controlled in time synchronism with the rotation of the drum for the fluxes i' and ī' delivered at each time to be a representation of the measured and stored height corresponding to the longitudinal position of the linear arrays on the map.


**Patentansprüche**

1. Verfahren zur Ortsbestimmung eines beweglichen Körpers (1) mit bekannter Bewegungsrichtung auf einer Landkarte, das die Verteilung eines physikalischen Parameters (z) ergibt, der vom beweglichen Körper aus in dem die nominelle Bahn des beweglichen Körpers umgebenden Bereich meßbar ist, dadurch gekennzeichnet, daß man die Landkarte in zwei kömplementären Teilen (13, 14) ausbildet, deren jeweilige Transparenz in jedem Punkt folgendes sind : für den einen der beiden Teile eine aufsteigende Funktion des Werts des Parameters in diesem Punkt, für den anderen eine abfallende Funktion dieses Werts ; man speichert an einem Abschnitt (p) von gegebener Länge die vom beweglichen Körper aus gemessenen aufeinanderfolgende Werte des Parameters, man bestimmt die Gesamtlichtströme, die die Bänder der Landkarte parallel zur theoretischen Bahn und in veränderlichem Abstand hiervon durchqueren, wenn man auf die beiden Teile Lichtströme richtet, von denen der eine, i', eine aufsteigende Funktion des gemessenen und gespeicherten Parameters ist und von denen der andere, ī, eine abfallende Funktion des Werts dieses Parameters ist, für mehrere relative Längspositionen des

7

Abschnitts und der Landkarte, und man bestimmt den Quer- und Längsort des Abschnitts, für den ein aus der Messung der Lichtströme erhaltener Korrelationsfaktor ein Maximum ist.

2. Verfahren nach Anspruch 1, dadurch gekennzeichnet, daß die Transparenz $\bar{\imath}$ des zweiten Teils im jedem Punkt durch die Beziehung $\bar{\imath} = \sqrt{1 - i^2}$ auf die Transparenz $i$ des entsprechenden Punktes des ersten Teils bezogen wird, und daß der Strom $\bar{\imath}'$ durch die Beziehung $\bar{\imath}' = \sqrt{1 - i'^2}$ auf den Strom $i'$ bezogen wird.

3. Verfahren nach Anspruch 3, dadurch gekennzeichnet, daß man für jeden Ort des Abschnitts die Größen $i\bar{\imath}' + \bar{\imath}i'$ oder $|i\,i' - \bar{\imath}\bar{\imath}'|$ bestimmt und daß man den ort des Abschnitts bestimmt, für den ein Maximum bzw. Minimum vorliegt.

4. Verfahren nach Anspruch 1, 2 oder 3, dadurch gekennzeichnet, daß die jeweiligen Transparenzen eineindeutige Funktionen des Werts des Parameters sind, und daß jeder Teil der Landkarte das negativ des anderen darstellt.

5. Verfahren nach einem der vorhergehenden Ansprüche, dadurch gekennzeichnet, daß der Parameter gebildet ist : entweder durch die Höhe über dem Boden eines den beweglichen Körper bildenden Luftfahrzeugs oder durch das tatsächliche Relief des überflogenen Geländes gegenüber einem willkürlichen Bezug.

6. Verfahren nach Anspruch 5, dadurch gekennezeichnet, daß das Relief durch eine Kombination aus Radio-Höhenmesser und Baroinertialsystem an Bord ermittelt wird.

7. Vorrichtung zur Ortsbestimmung eines beweglichen Körpers (11) mit bekannter Bewegungsrichtung auf einer Landkarte, die die Verteilung eines physikalischen Parameters (z) ergibt, der vom beweglichen Körper aus meßbar ist, gekennzeichnet durch einen Ort, der bestimmt ist zur Aufnahme einer aus zwei Teilen (13, 14) bestehenden Landkarte, die ein beiderseits der nominellen Bahn (10) gelegenes Geländeband wiedergibt, wobei einer der Teile in jedem Punkt eine Transparenz hat, die eine aufsteigende Funktion des Werts des Parameters (z) in diesem Punkt ist, un wobei der andere ein Transparenz hat, die eine abfallende Funktion des Werts des Parameters ist, durch Beleuchtungsmittel (24), die auf einer Seite der Landkarte angeordnet sind und auf einen gegebenen Längenbruchteil der beiden Teile hiervon einen Lichtstrom richten, der für einen der Teile und für jede Längsposition eine aufsteigende Funktion des gespeicherten Werts des vom beweglichen Körper aus gemessenen Parameters und für den anderen eine abfallende Funktion ist, durch Mittel zur Messung der Lichtströme, die mehrere Bänder parallel zur Bewegungsrichtung in veränderlichen Abständen von der theoretischen Bahn durchqueren, durch Mittel, die eine Verschiebung der Längsposition vom beleuchteten Bruchteil der Landkarte ermöglichen, und durch Mittel zur Bestimmung der Querposition und der Längsposition des Bandes, für die eine Funktion der empfangenen Lichtströme ein Maximum oder Minimum ist.

8. Vorrichtung nach Anspruch 7, dadurch gekennzeichnet, daß die Transparenzen $i$ und $\bar{\imath}$ der beiden Teile der Landkarte in jedem Punkt jeweils proportional zur Höhe und gleich $\sqrt{1 - i^2}$ sind, und daß die Beleuchtungsmittel derart gesteuert werden, daß sie folgendes liefern : an jedem Punkt eines der Teile einen zur tatsächlichen gespeicherten Höhe proportionalen Lichtstrom $\bar{\imath}'$ und an jedem dem anderen Teil entsprechenden Punkt eine Lichtstrom $\bar{\imath}' = \sqrt{1 - i'^2}$.

9. Vorrichtung nach Anspruch 7, dadurch gekennzeichnet, daß die Mittel zur Messung der gesamten Lichtströme, die mehrere zur Bewegungsrichtung parallele Beänder durchqueren, eine Leiste aus ingerierenden Detektoren aufweisen, die von einer drehbaren Trommel (15) getragen wird, an der die Landkarte anliegt.

10. Vorrichtung nach Anspruch 9, dadurch gekennzeichnet, daß die Mittel zur Beleuchtung aus Lichtkästen bestehen, die den Ort überdecken und Lichtquellen aufweisen, die synchron mit der Drehung der Trommel derart gesteuert werden, daß die in jedem Augenblick gelieferten Ströme $i'$ und $\bar{\imath}'$ die Höhe wiedergeben, die entsprechend der von den Stegen eingenommenen Längsposition auf der Landkarte gemessen und gespeichert wird.

FIG.1

FIG.2

FIG.4

FIG.3

FIG.5